# EUROPEAN PATENT APPLICATION

(11) **EP 2 597 041 A1**
(43) Date of publication of application: **29.05.2013**
(21) Application number: 11190030.4
(22) Date of filing: 22.11.2011
(51) Int. Cl.: B64G 1/50, F28F 21/02

(54) **Thermal strap**

(71) Applicant: Active Space Technologies GmbH, 12489 Berlin (DE)
(72) Inventor: Nadalini, Riccardo, 10787 Berlin (DE)
(74) Representative: Gulde Hengelhaupt Ziebig & Schneider

(57) **Abstract**

The present invention refers to a thermal strap formed by fibres or foils and comprising a flexible middle section (10) and two rigid end parts (12). The fibres or foils are embedded in a rigid matrix material thus forming the rigid end parts (12).

## Description

The present invention refers to a thermal strap formed by fibres or foils, comprising a flexible middle section and two rigid end parts.

### TECHNOLOGICAL BACKGROUND AND PRIOR ART

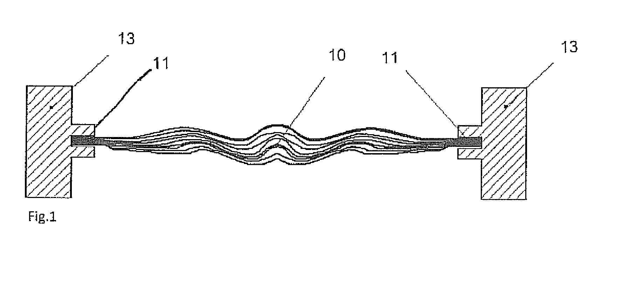

Thermal straps are used when sensitive equipment e.g. infrared detectors or focal planes needs to be coupled thermally but decoupled structurally to coolers e.g. cryocoolers or heat exchangers for application in aerospace industry. A cross-section of a thermal strap according to the state of the art can be seen in figure 1. These thermal straps are thermoconducting links including a flexible link ― the middle section 10, made by thin foils or wires, which are solidly bound to two rigid metal end plates 13. A clamp-connection 11 is one state of the art to connect the flexible middle section 10 to the rigid metal end plates 13.

According to former state of the art the middle sections consist of wires or foils made of metal, e.g. aluminium or copper, while the metal plates are usually made of aluminium. The document "Daimler-Benz Aerospace ― Flexible thermal link ― ESTEC Contract No.:11200/94/NL/FG, September 1997" was one of the first documents that provides a thermal strap being no more made only by metal, but made by carbon fibres for the flexible middle section connected to the metal end plates. Another known possibility is the use of graphite as material for the wires or foils.

One common field of application of such thermal straps is the application in astronautics. An exceptionally important parameter of such parts is their mass. To provide a certain rate of heat flow at a given temperature difference, the mass of the thermal strap increases with the square of its length. This causes thermal straps to be relatively heavy if the required connection length extends beyond a few centimetres. Moreover the middle section must be flexible in all directions to guarantee structural isolation.

The intention of this invention is therefore to provide a thermal strap with further reduced mass while ensuring a comparable rate of heat flow.

### SUMMARY

In order to solve the above mentioned technical problem, there is provided a thermal strap formed by thermoconducting fibres or foils, comprising a flexible middle section and two rigid end parts. The fibres or foils are embedded in a rigid matrix material thus forming the rigid end parts.

Instead of creating the rigid end parts and connecting them to the flexible middle section, the two ends of the fibres or straps forming the flexible middle section are hardened. The flexible middle section mainly comprises or consists of the fibres or foils, thus providing flexibility at a high level. The fibres or foils run from one end of the thermal strap to the other end of the thermal strap. This avoids thermal connections between the flexible middle section and the rigid end parts as known by the state of the art. As a result the total mass of the thermal strap can be reduced while providing the same abilities to conduct heat.

A parameter to describe the suitability of a certain material to be used in thermal straps is its thermal performance index. The thermal performance index describes the thermal conductivity of the material related to the density of the material. The higher the thermal performance index of a material is, the higher is the achievable rate of heat flow of the material at the same mass, geometry and temperature difference. The thermal conductivity and therefore the thermal performance index depends on the temperature of one ending plate while conducting heat.

According to a preferred embodiment the fibres or foils are made of high conductivity carbon materials, preferably the fibres are carbon fibres (e.g. K1100) or graphite fibres (e.g. APG or HOPG) or the foils are graphite foils. These materials grant huge advantages in thermal conductivity and, more important, in the thermal performance index at room temperature as well as cryogenic temperature. Some of these materials provide good characteristics with respect to stiffness values and brittleness. This assures enough flexibility of the middle section while providing a reasonable thermal conductivity at the same time.

Preferably the fibres used for the middle section are PAN (polyacrylonitrile) based fibres, because of their high flexibility in contrast to fibres based on pitch resin. A disadvantage of PAN based fibres is their thermal conductivity which is lower than the one of pitch based fibres as well as their price which is the result of a difficult production process.

Preferably the thermal conductivity of the carbon fibres is higher than 150 W/mK and the thermal conductivity of the graphite fibres or foils is higher than 500 W/mK.

According to another preferred embodiment the fibres are interwoven. Due to this feature the production process can be eased. If foils are used, they are preferably arranged in tiers. By piling the foils up a high rate of heat flow at a compact space can be realized. Preferably there is some space in between each pair of foils to increase the flexibility of the middle section. If the thermal strap is bended, the space between the single foils is reduced thus providing a high flexibility of the middle section.

Preferably the fibres or foils pierce the end parts so that they run from one contact surface to the other contact surface. This embodiment can raise the thermal conductivity of the thermal strap, as the two parts interchanging thermal energy are connected directly by the fibres or foils.

The end parts usually are fixed to the components e.g. of a satellite by screws to guarantee a good contact in order to transfer heat. Therefore the end parts must have a reasonable stiffness to exert sufficient pressure enabling high thermal conductivity. According to a preferred embodiment this is done by the use of a polymer as rigid matrix material. Preferably this polymer is an epoxy resin or a polyester, while the polyester preferably is cyanate ester resin. Cyanate ester resin is already used for space applications. It has a high temperature stability due to high glass temperature, a high intrinsic flame resistance and does not present out-gassing. Its values of thermal conductivity are within a wide range of 0.2 up to 108 W/mK.

According to a preferred embodiment of the invention the matrix material is preferably filled with a thermoconducting filler. The thermal conductivity of the thermoconducting filler is higher than the thermal conductivity of the matrix material which increases the overall thermal conductivity of the end parts. Preferably the thermoconducting filler is one selected of short carbon fibres, carbon nanotubes or boron nitride. The importance of the filling materials and also the importance of its presence or not inside the end parts depends on the design of the end parts, e.g. if the fibres or foils pierce the end parts from their one end to their other end or not.

Furthermore a satellite comprising the thermal strap according to the invention is comprised. The thermal strap is used to thermally couple two parts, being able to conduct thermal energy from one part to the other.

Moreover a use of the thermal strap according to the invention is provided. The thermal strap is used for application in aerospace industry, preferably for the use in satellites.

### DESCRIPTION OF THE DRAWINGS

- Figure 1: A cross-section of a thermal strap according to the state of the art.
- Figure 2: A cross-section of a thermal strap using foils.
- Figure 3: A cross-section of a thermal strap using fibres.
- Figure 4: A cross-section of another embodiment of a thermal strap using fibres.
- Figure 5: A three dimensional view of a thermal strap using fibres.
- Figure 6: A three dimensional view of a thermal strap using interwoven fibres.

### DETAILED DESCRIPTION OF THE INVENTION

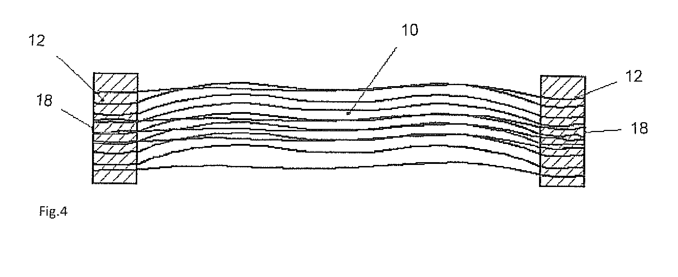

Figure 1 has already been described in the chapter technological background and prior art.

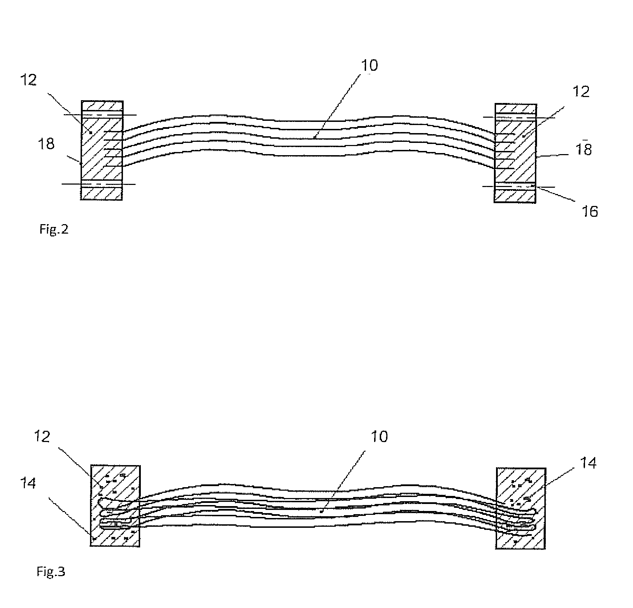

Figure 2 shows a cross-section of a thermal strap according to the invention. A plurality of foils e.g. graphite foils forms a flexible middle section 10. To arrange a big number of foils, they can be arranged in tiers with some space in between each pair of foils thus providing a great flexibility of the middle section. The ends of the foils are bond in a matrix material thereby forming the rigid end parts 12. The two end parts 12 can have holes 16, so that they can be screwed on the tempering or tempered parts therefore realizing a good contact of the contact surface 18 to the tempering or tempered parts, being able to conduct thermal energy from one part to the other.
Figure 3 shows another cross-section of a thermal strap according to the invention. This time the flexible middle section 10 is formed by a weave consisting of only one single fibre that is wound back and forth. Another possibility would be to use a plurality of fibres. The same construction can be done with an even more flexible middle section 10 that mainly comprises or consists of fibres that are not interwoven. Moreover to increase the thermal conductivity of the matrix material and therefore the thermal conductance of the thermal strap, a thermoconducting filler 14 e.g. carbon nanotubes or silver particles can be inserted inside the matrix material.
   Another possibility to increase the thermal conductance of the thermal strap would be an embodiment where the fibres or foils pierce the contact surface 18. Figure 4 shows such an embodiment which allows the fibres or foils to contact the tempering or tempered parts directly.

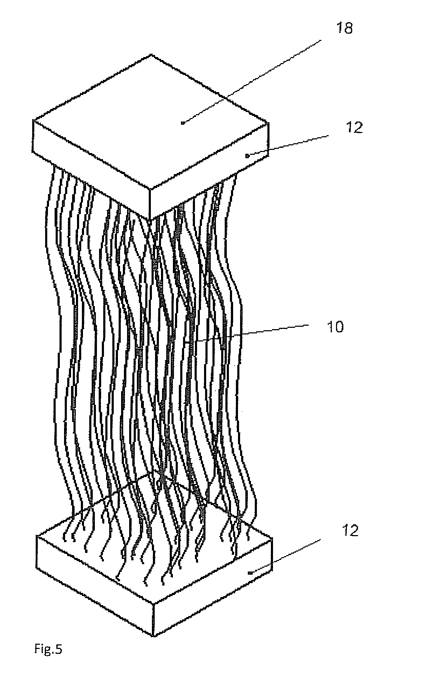

Figure 5 shows a three dimensional view of a thermal strap according to the invention. The flexible middle section 10 between the two rigid end parts 12 is formed by a plurality of fibres, e.g. carbon fibres. The rigid end parts 12 are formed as plates, their inner structure can be formed as already described in the description of figure 3 and figure 4. The contact surface 18 should be adapted to the surface it is fitted on, this usually results in a plain contact surface 18.

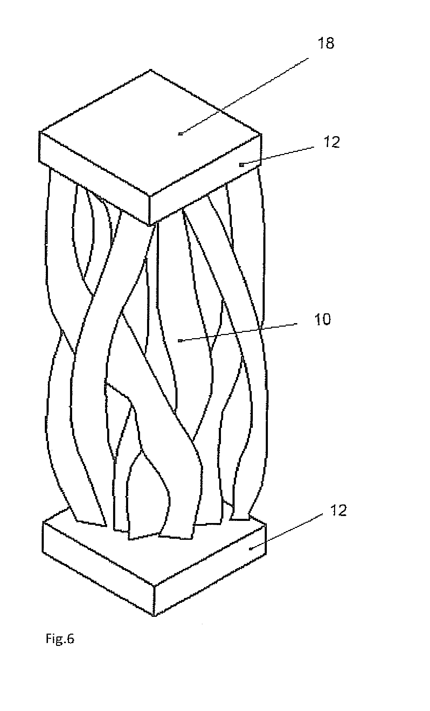

Figure 6 shows a three dimensional view of another embodiment of the thermal strap according to the invention. To provide a more compact middle section 10, the fibres are bundled and loosely weaved.

One of the disadvantages that can occur by using carbon material is a micro- and macroscopic scale brittleness of the carbon material. This brittleness may cause performance reduction and dispersion of particles which contaminates close-by sensitive parts. This may require an encapsulation of the fibres or foils, which can be done by a polymer, e.g. boPET. Another solution to the contamination problem would be a cleaning process of the thermal strap just after the manufacturing phase.

To produce the thermal straps according to the invention, in a first step the fibres or foils are prepared in the desired shape. In a second step the ends of the fibres or foils are bonded by putting them into a mold which gets filled with the liquid matrix material, e.g. epoxy resin. After the matrix material hardened e.g. in an autoclave, the end parts can be milled and grinded thus forming a plate or another desired shape.

## Claims

1. A thermal strap formed by thermoconducting fibres or foils, comprising a flexible middle section (10) and two rigid end parts (12), wherein the fibres or foils are embedded in a rigid matrix material thus forming the rigid end parts (12).

2. The thermal strap of claim 1, wherein the fibres are carbon fibres or graphite fibres or the foils are graphite foils.

3. The thermal strap of claim 1 or 2, wherein the thermal conductivity of the carbon fibres is higher than 150 W/mK.

4. The thermal strap of claim 1 or 2, wherein the thermal conductivity of the graphite fibres or foils is higher than 500 W/mK.

5. The thermal strap of claim 1, wherein the fibres are interwoven.

6. The thermal strap of claim 1, wherein the foils are arranged in tiers.

7. The thermal strap of any previous claim, wherein the rigid matrix material is a polymer.

8. The thermal strap of claim 7, wherein the polymer is an epoxy resin or a polyester.

9. The thermal strap of any previous claim, wherein the matrix material further comprises a thermoconducting filler (14).

10. The thermal strap of claim 9, wherein the thermoconducting filler (14) is one selected of short carbon fibres, carbon nanotubes or boron nitride.

11. A satellite comprising the thermal strap of any of claims 1 to 10.

12. Use of the thermal strap of any of claims 1 to 10 for application in aerospace industry.
